## Europäisches Patentamt
(19) **European Patent Office**
**Office européen des brevets**

(11) Publication number: **0 034 993**
**A1**

(12) **EUROPEAN PATENT APPLICATION**

(21) Application number: **81400301.8**

(22) Date of filing: **26.02.81**

(51) Int. Cl.³: **G 08 G 1/09**
**H 04 N 7/00**

(30) Priority: **26.02.80 FR 8004196**

(43) Date of publication of application:
**02.09.81 Bulletin 81/35**

(84) Designated Contracting States:
**DE FR GB**

(71) Applicant: **Dahan, Pierre-Louis**
**106, Boulevard Pereire**
**F-75017 Paris(FR)**

(71) Applicant: **Letuan, Phac**
**5, Parc de la Bièvre**
**F-94240 l'Hay-Les-Roses(FR)**

(72) Inventor: **Dahan, Pierre-Louis**
**106, Boulevard Pereire**
**F-75017 Paris(FR)**

(72) Inventor: **Letuan, Phac**
**5, Parc de la Bièvre**
**F-94240 l'Hay-Les-Roses(FR)**

(74) Representative: **Cabinet Martinet**
**62, rue des Mathurins**
**F-75008 Paris(FR)**

(54) A video system for assisting automobile traffic.

㉗ Radio system for video display of a map and symbols traced on the map : It comprises a radio transmitter transmitting a plurality of digital messages, each including the address of a map among a plurality of such maps, the definition of symbols among a plurality of such symbols and the coordinates of the symbols on the map. At the receiving station, there is provided a display device having a plurality of points defined by coordinates and which can be selectively activated, a plurality of transparent views representing the maps and a selector for selecting a view of given address. The selected view is projected on to the display device. The message including a map address equal to the address of the selected view is also selected and display logic means activates the points of the display device in response to the definition and coordinates of the symbols contained in the selected message.

./...

EP 0 034 993 A1

## FIG.4

- 1 -

## A VIDEO SYSTEM FOR ASSISTING AUTOMOBILE TRAFFIC

The present invention concerns a digital video system for assisting automobile traffic wherein traffic flow and traffic build-up signals are transmitted along a radio-frequency channel by a transmitter unit to receive units placed in motor vehicles and are displayed on screens that can be seen by the drivers.

German Patent No. 2 155 547 filed March 31, 1971 has disclosed a process for transmitting through television channels provisional graphical information traced on a permanent map or plan without transmitting the permanent map or plan itself. Two identical maps or plans are located at the originating and terminating stations of the television channel and the map or plan at the originating station is covered with a polarizer parallel sided sheet. The provisional information is traced on this sheet and a transmit camera, the objective of which is covered by a polarizer member whose polarization direction is perpendicular to the polarization direction of the polarizer sheet scans the map or plan together with the provisional information traced thereon. Only the provisional information is transmitted and at the terminating station, it is combined with the permanent information locally provided by a receive camera scanning the map or plan at the terminating station.

This prior art process presents several drawbacks when used for providing traffic information to car drivers. First transmission is achieved through television channels which necessitates the use of ultra high frequency carriers and the use of cameras, unpractical in ordinary cars. Secondly, the traffic state announcements are made irregularly only when the traffic undergoes at least one substantial change. Thus, the traffic information state at any instant comprises a part changed and a part unchanged from the preceding announcement. The prior art does not provide any means for distinguishing these two parts of the traffic information and for synthetizing the same.

In a display panel of the kind concerned, the locally generated map and the remotely generated symbols are to be added on one and the same display panel. Due to the fact that the screen of a cathode ray tube is opaque, its inner surface does not lend itself to act as a projecting screen. It results that the addition of the permanent and provisional information must be made on the electronic signals.

In the invention, a transmit unit transmits messages in sequence concerning only traffic flow and build-up indications to the exclusion of plans or maps of the zones to which the indications refer. These plans or maps are held by the car driver in the form of transparencies or a film cassette and are selectively set by him in the receiving unit. The display device is a large area liquid crystal display of transflective viewing mode. A transparent display screen is provided close to the liquid crystal display and the selected transparency or the film image is projected on this screen. The viewer sees the symbols on the liquid crystal display and the map on the display screen superimposed on each other.

It thus results that the complete map or plan of traffic flow and build-up in a sector comprises a map or plan background memorized locally and displayed as an image fixed part and a traffic flow and build-up indication superimposed on the screen on this map or plan background which constitutes a variable part of the image. The variable image is derived from a message transmitted by the transmitter unit and containing only variable information to the exclusion of any basic fixed information.

The message therefore only calls for a small pass band and the transmission is made at a relatively low carrier frequency of the same magnitude as those used for communications between fixed and moving units and not a UHF carrier frequency approaching those used in television networks.

To summarise then, the image displayed on the receiver unit display screen results from adding a fixed image formed locally using data memorized in the receiver unit and a variable image received from the transmitter.

The receiver unit chooses the proper message amongst those transmitted through time division multiplexing by the transmitter unit which has a predetermined address. This message is decoded into symbols and symbols coordinates which are stored in a variable image memory.

The invention concerns a radio system for video display of a map and symbols traced on said map comprising :

means for radio transmitting a plurality of digital messages, each including the address of a map among a plurality of maps, the address of symbols among a plurality of symbols and the coordinates of said symbols on said map ;

a display device having a plurality of points defined by coordinates and which can be selectively activated ;

a plurality of transparent views representing said maps and means for projecting said views to said display device ;

display logic means for activating the points of the display device in response to the address and coordinates of the symbols contained in the messages, characterized in that it further comprises a common selector for selecting the address of the view to be projected and the address of the message relative to said view.

The invention will now be described in detail with reference to the drawings appended hereto wherein :

- Figs. 1A, 1B and 1C represent a fixed image, a variable image and a composite image respectively, where the latter image corresponds to a first case of traffic build-up ;

- Figs. 2A, 2B and 2C represent a fixed-image, a variable image and a composite image respectively, where the latter image corresponds to a second case of traffic build-up ;

- Fig. 3 represents, in block-diagram form, the transmitter unit used in the transmission system for assisting the motor vehicle traffic flow ;

- Fig. 4 represents, in block-diagram form, a receiver unit in a first embodiment of the system ;

- Figs. 5A, 5B and 5C show how the symbols of Figs. 1B and 1C are generated on the LCD ;

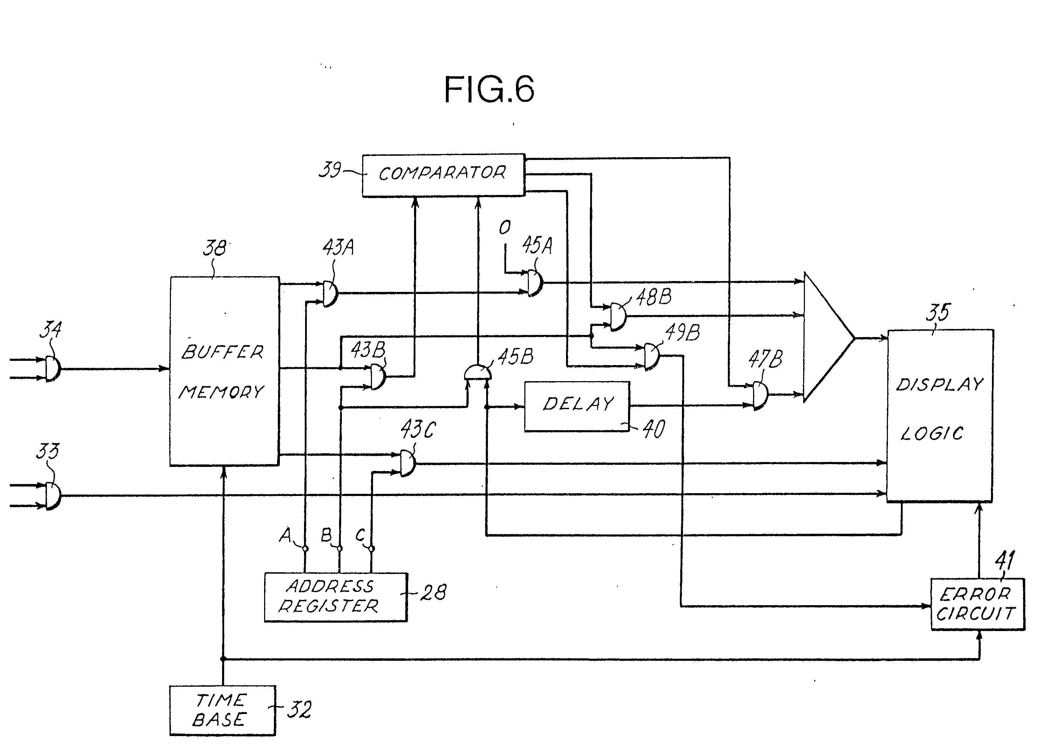

- Fig. 6 represents, in block-diagram form, a modification of the receiver unit in Fig. 4 ;

- Fig. 7 represents the composite display of the invention ; and

- Figs. 8 and 9 show a perspective view of the receiver unit.

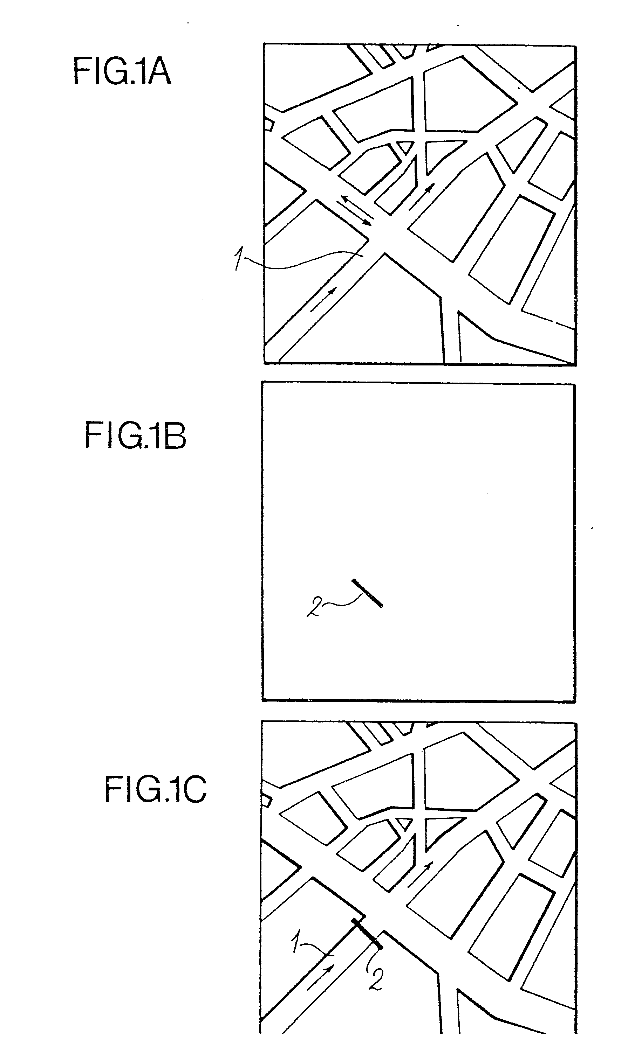

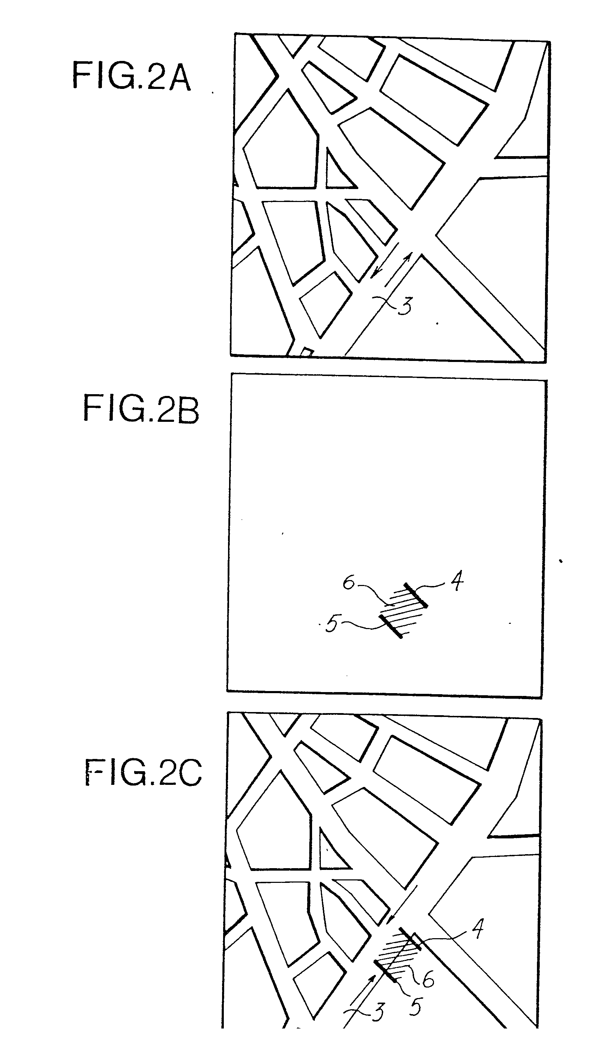

Looking now at Figs. 1A, 1B and 1C, Fig. 1A depicts the plan of a town's district ; Fig. 1B depicts the traffic flow and build-up symbols and Fig. 1C is a representation of Figs. 1A and 1B superimposed. In a similar way, Fig. 2A depicts the plan of a town's district ; Fig. 2B depicts the traffic flow and build-up symbols and Fig. 2C is a superimposition of Figs. 2A and 2B.

Avenue 1 (Fig. 1A) is a one-way street and is blocked off (Fig. 2B) by a thick bar covering the whole width of the street, indicating that there is traffic building-up on avenue 1 at the point shown by bar 2.

Road 3 (Fig. 2A) has two-way traffic and is blocked off (Fig. 2B) by two separated bars 4 and 5 covering just half the width of the road. Between the two bars is a shaded area 6. This means that the direction corresponding to the traffic blocked off by bars 4 and 5, there is a traffic jam depicted by shaded area 6.

The indication employed for pointing out traffic build-up, jams, detours, parts of the road under black ice, snow, floods, ... can give rise to a wide choice of symbols and signs and the present invention is no way bound by the choice made.

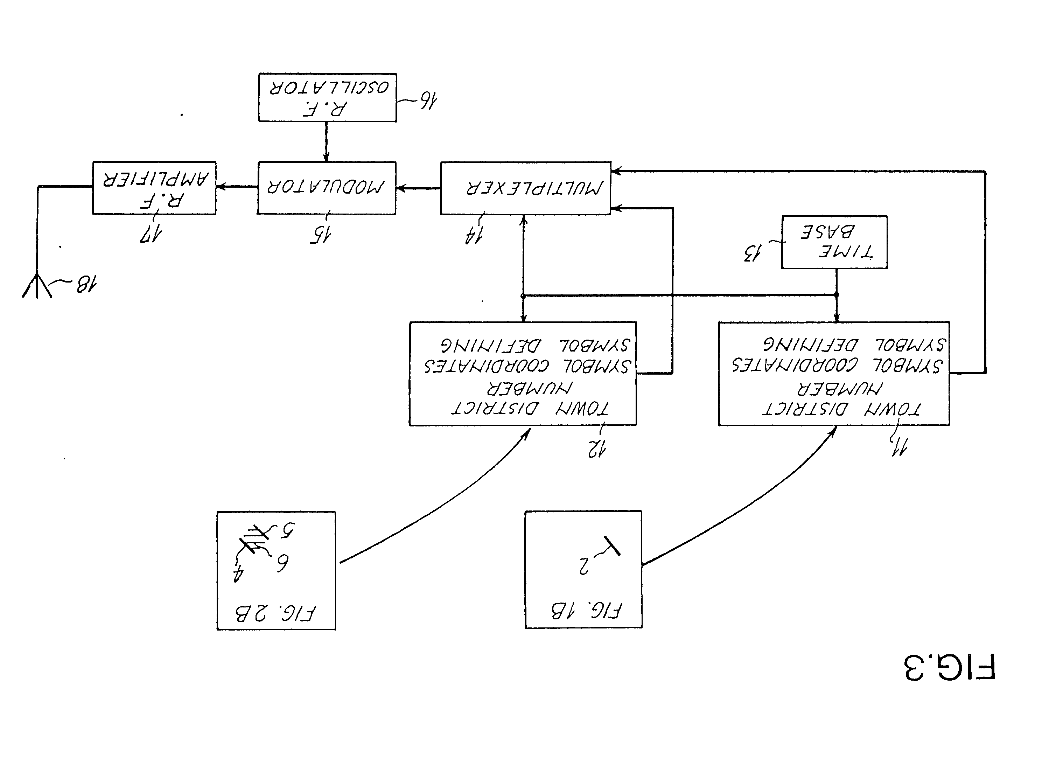

With reference to Fig. 3, the symbols of Figs. 1B and 2B are coded by the following messages :

Fig. 1B : number of the town district ; coordinates of the middle of segment 2 ; orientation and length of segment 2.

Fig. 2B : number of the town district ; coordinates of the middle of segment 4 ; coordinates of the middle segment 5 ; orientation and length of segments 4 and 5 ; binary mode orientation and length controlling the illumination of all the points of the LCD lying between segments 4 and 5.

Reference numerals 11, 12, ... represent shift register respectively containing the messages defining Fig. 1B and Fig. 2B. These registers are controlled by time base 15. The output signals from registers 11, 12, ... are time multiplexed in multiplexer 14 ; the multiplexed signal is fed into a modulator 15 receiving a radio-frequency wave from a local oscillator 16 and the modulated radio-frequency signal is fed into a radio-frequency amplifier 17 and a transmitter aerial 18.

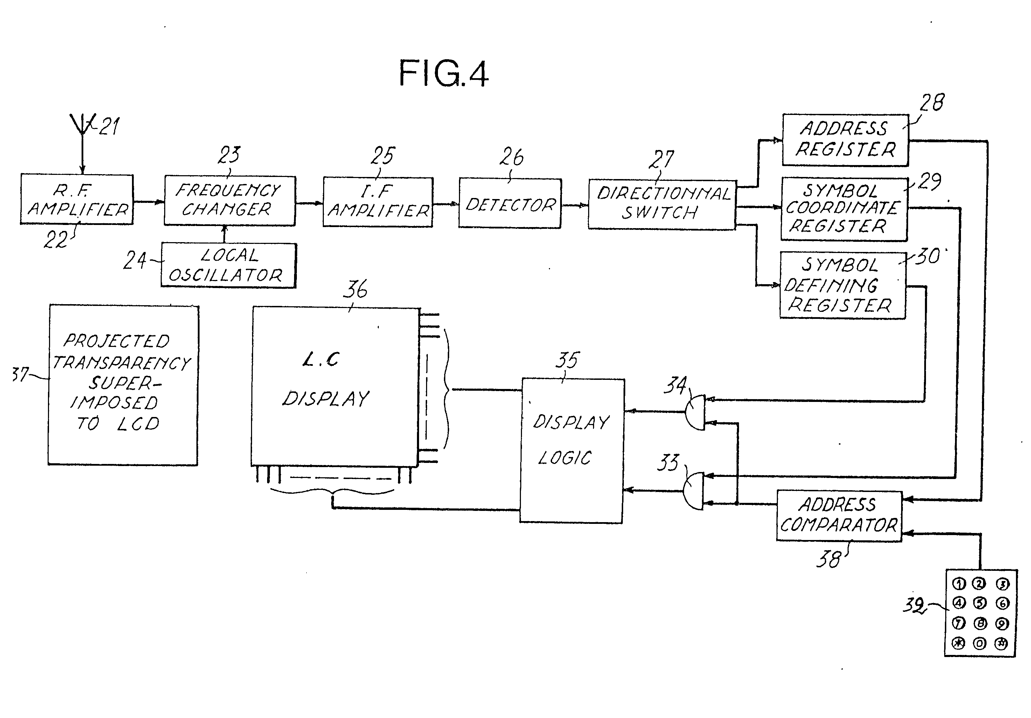

Fig. 4 depicts one receiver unit embodiment. It comprises an aerial 21, a radio-frequency amplifier 22, a frequency changer 23 receiving a local wave from a local oscillator 24, an intermediate frequency amplifier 25 and a detector 26. Detector 26 is linked to a directional switch 27 which directs the town district address to an address register 28, the coordinates to a coordinate register 29 and the symbol parameters to a symbol defining register 30.

The address stored in address register 28 is compared in an address 28 comparator 31 which receives from a dialing key-board 32 a reference address which is that as ascribed to the sector where the driver is. Comparator 31 in the event of coïncidence of the reference address and the stored address emits an output signal which opens AND gates 33 and 34, giving access to a symbol and symbol coordinates logic 35. Symbol logic 35 controls liquid crystal display 36.

The transparency 37 is projected on to LCD 36.

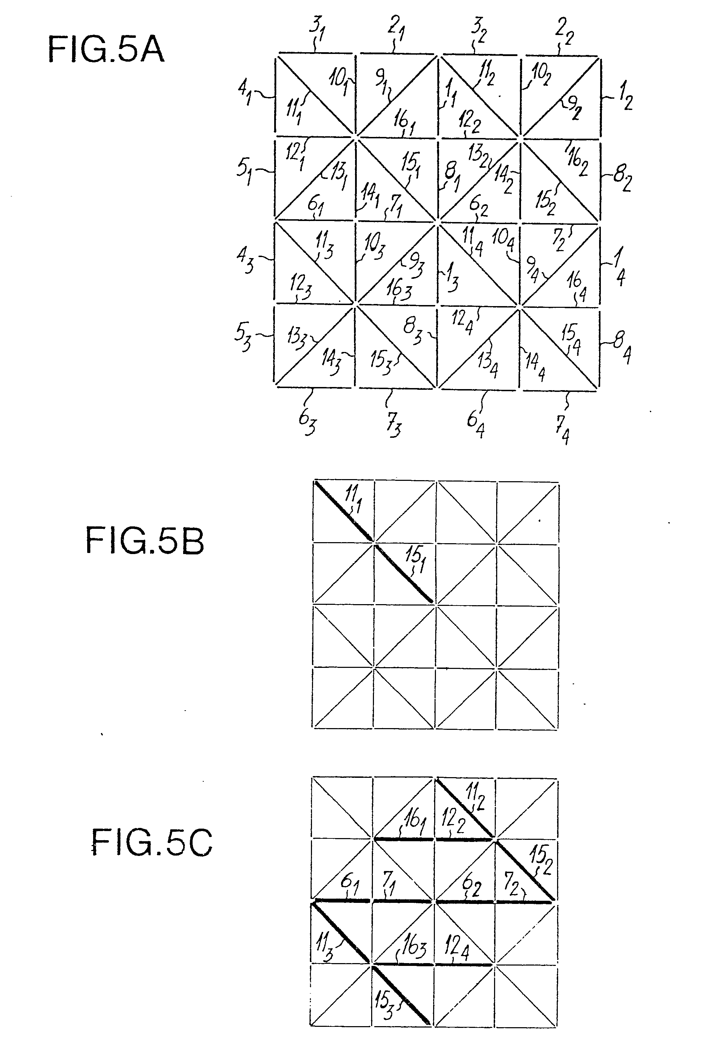

Figs. 5A, 5B and 5C show how the symbols of Figs. 1B and 2B are displayed.

Let us assume that the LCD is formed by contiguous sixteen segment characters. Four characters are represented in Fig. 5A and the corresponding segments are given reference numerals $1_1$ to $16_1$, $1_2$ to $16_2$, $1_3$ to $16_3$ and $1_4$ to $16_4$. The boundary segments bear two different reference numerals, for example segments $1_1$ and $4_2$ designate one and the same segment. In such cases, only the reference numeral having the lower substrict is retained.

The symbol of Fig. 1B is obtained (Fig. 5B) by illuminating segments $1_{11}$ and $1_{15}$.

The symbol of Fig. 2B is obtained (Fig. 5C) by illuminating segments $11_2$, $15_2$, $11_3$, $15_3$, $16_1$, $12_2$, $6_1$, $7_1$, $6_2$, $7_2$, $16_3$ and $12_4$.

In a further example of assisted motor vehicle traffic flow, the transmitter unit, instead of periodically transmitting road sign messages valid at a given moment, transmits only, each time there is a change in the traffic situation, a first message on the indication and build-up symbols which are cancelled, a second message on the indication and build-up symbols which are held, and lastly, a third message of the indication and build-up symbols which are new. The three messages carry the same address and all three thus open AND gates 33 and 34. The address does, however, include an index not taken into account when selecting messages to be received in a given receiver unit but which is intended to mark one of three marking terminals A, B and C of address register 28. Moreover, the messages received are memorized in a buffer memory 38.

When the receiver unit receives the message on the symbols to be cancelled, address register 28 sypplies a 1 at its A terminal which opens gates $43_A$ and $45_A$. Display logic 35 and buffer incoming 38 are scanned in synchronism and each time a 1 is read in memory 38, a 0 is entered in the corresponding memory location in memory of display logic 35, thereby causing the obsolete indication and build-up symbols to be blanked out.

When the receiver unit receives the images of the symbols to be held, address register 28 supplies a 1 at its B terminal which opens gates $43_B$ and $45_B$ interposed between the respective outputs of memoiries 35 and 38 and activates a comparator 39. This comparator compares the characters of identical location in the two memories and produces a 1 at its output in the event of a positive comparison. This 1 is fed to input gate $47_B$ giving access to the memory in display logic 35. As a result, should the comparison be positive, then the signals read in 35 are re-entered therein with a delay due to delay circuit 40. Were the comparison to be negative, then the case of a signal being contained in 35 and not contained in 38 is distinguished from the case of a signal being contained in 38 and not contained in 35. These discordances are settled to be benefit of memory 35. In the first case, the signal read in 35 is re-entered therein via gate $48_B$. In the second case, the signal is directed towards an error circuit 41, via gate $49_B$. Finally, upon receiving the new indication, AND gate $43_C$ is opened by a 1 at terminal C of address register 28 and there is a transfer from the buffer memory 38 to the memory in display logic 35.

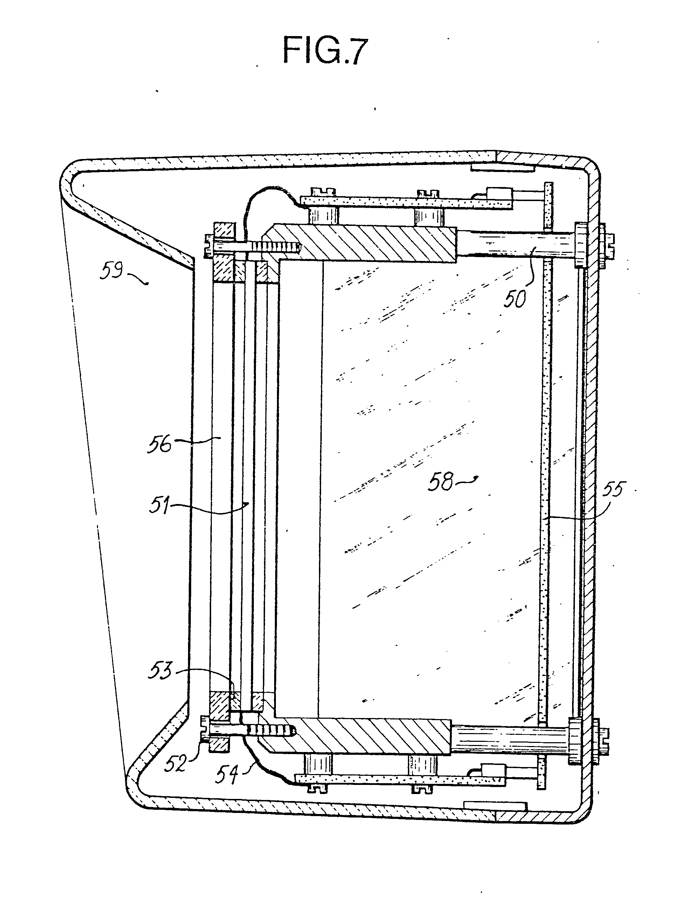

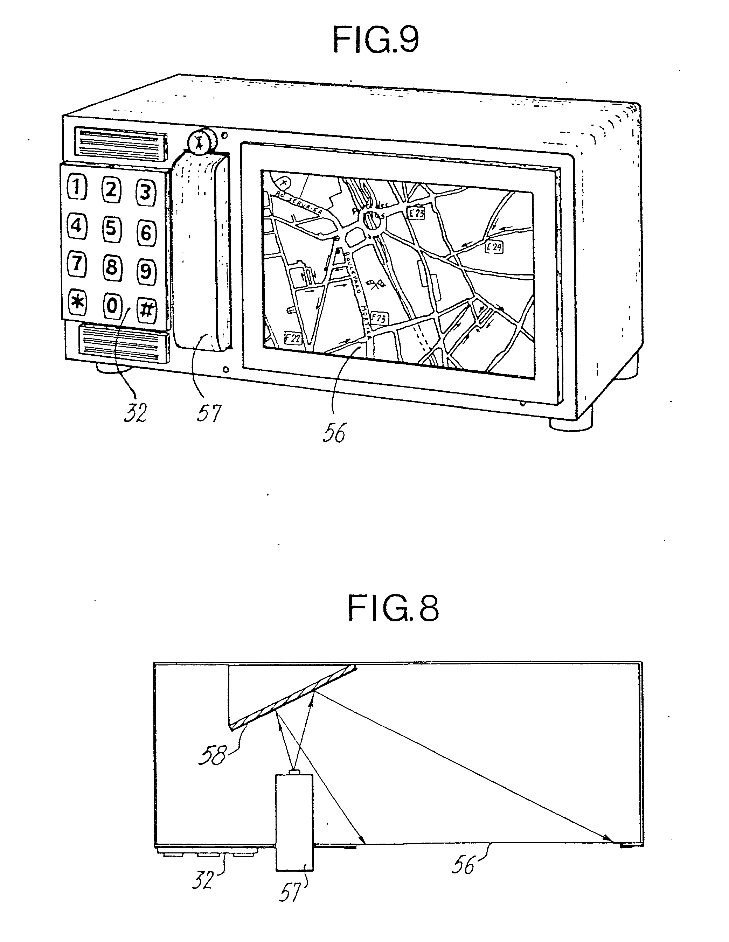

Referring now to Figs. 7 and 8, the display device comprises a frame 50, a large area liquid crystal display panel 51 attached to the frame by screws 52. This display panel is connected to the display logic 35 by snap on terminal strips 53, elastometric connections 54 and a printed card board 55.

Before and close to the LC display 51, a transparent screen 56 is attached to the frame. The map provided by the film in cassette 57 is imaged on to screen 56 by a plane mirror 58. The display device is protected by a cover 59.

On Fig. 8, one can see the dialling keyboard 32, the cassette 57. the screen 56 and the mirror 58.

- 10 -                    0034993

CLAIMS

1 - Radio system for video display of a map and symbols traced on said map comprising :

means for radio transmitting a plurality of digital messages, each including the address of a map among a plurality of maps, the address of symbols among a plurality of symbols and the coordinates of said symbols on said map ;

a display device having a plurality of points defined by coordinates and which can be selectively activated ;

a plurality of transparent views representing said maps and means for projecting said views on to said display device ;

display logic means for activating the points of the display device in response to the address and coordinates of the symbols contained in the messages, characterized in that it further comprises a common selector (32, Figs. 4 and 9) for selecting the address of the view to be projected and the address of the message relative to said view.

2 - Radio system as set forth in claim 1 characterized in that the display device is a large area transflective viewing mode liquid crystal display (51).

3 - Radio system as set forth in claim 1 characterized in that the transparent views are transparencies.

4 - Radio system as set forth in claim 1 characterized in that the transparent views are views in a film cassette (57).

5 - Radio system for video display of a map and symbols traced on said map comprising :

.means for radio transmitting sequentially a plurality of digital messages, each including the address of a map among a plurality of maps, the address of symbols among a plurality of symbols and the coordinates of said symbols on said map, the symbols in a given message being classified, with respect to the symbols in the preceding message relative to the same map address, in symbols to be deleted, symbols to be held and symbols to be added, each of said symbol class being designated by a flag ;

a display device having a plurality of points defined by coordinates and which can be selectively activated ;

a plurality of transparent views representing said map and having addresses assigned thereto ;

means for selecting among said view plurality the view having a given address and means for projecting the selected view on to the said display device ;

means for selecting among said address message plurality the message including a map address equal to said selected view address ;

characterized in that it further comprises a display logic means (28, 43A, 43B, 43C) controlled by said flags for disactivating the points of the display device in response to the addresses and coordinates of the symbols to be deleted, continuing the activation of the points of the display device in response to the addresses and coordinates of the symbols to be held and activating the points of the display device in response to the addresses and coordinates of the symbols to be-added.

**FIG.1A**

**FIG.1B**

**FIG.1C**

0034993

FIG.2A

FIG.2B

FIG.2C

# FIG.3

FIG. 1B

2

FIG. 2B

6 4
5

11
TOWN DISTRICT
NUMBER
SYMBOL COORDINATES
SYMBOL DEFINING

12
TOWN DISTRICT
NUMBER
SYMBOL COORDINATES
SYMBOL DEFINING

13
TIME
BASE

14
MULTIPLEXER

15
MODULATOR

17
R.F
AMPLIFIER

18

16
R.F.
OSCILLATOR

0034993

# FIG.4

FIG.5A

FIG.5B

FIG.5C

# FIG.6

COMPARATOR 39

38 BUFFER MEMORY

34

33

43A

43B

43C

O 45A

45B

48B

49B

DELAY 40

47B

A B C

ADDRESS REGISTER 28

TIME BASE 32

35 DISPLAY LOGIC

41 ERROR CIRCUIT

6/8

0034993

0034993

## FIG.7

## FIG.9

32    57    56

## FIG.8

58    32    57    56

0034993

European Patent Office

**EUROPEAN SEARCH REPORT**

Application number

EP 81 40 0301

| DOCUMENTS CONSIDERED TO BE RELEVANT | | | CLASSIFICATION OF THE APPLICATION (Int Cl.³) |
|---|---|---|---|
| Category | Citation of document with indication, where appropriate, of relevant passages | Relevant to claim | |
| A | <u>DE - B - 2 115 547</u> (GRUNDIG)<br><br>* Column 1, line 1 to column 2, line 36 *<br><br>---<br><br>IBM TECHNICAL DISCLOSURE BULLETIN, vol. 18, no. 1, June 1975, NEW YORK (US)<br>M.K. BUSH et al.: "Display of stored images", pages 272,273<br><br>* Page 272 *<br><br>--- | 1<br><br><br><br><br><br>1 | G 08 G 1/09<br>H 04 N 7/00 |
| A | <u>US - A - 3 507 993</u> (MULLEY)<br><br>* Column 1, lines 50-53; column 2, lines 1-30 *<br><br>--- | 1,3,4 | TECHNICAL FIELDS SEARCHED (Int Cl.³)<br><br>G 08 G 1/09<br> 1/00<br>H 04 N 7/00<br> 7/18 |
| A | <u>DE - A - 2 326 199</u> (KLUGE)<br><br>* Claims 1-3 *<br><br>--------- | 1 | |

CATEGORY OF CITED DOCUMENTS

X: particularly relevant
A: technological background
O: non-written disclosure
P: intermediate document
T: theory or principle underlying the invention
E conflicting application
D: document cited in the application
L citation for other reasons

& member of the same patent family.

corresponding document

| | The present search report has been drawn up for all claims | | |
|---|---|---|---|
| Place of search<br>The Hague | Date of completion of the search<br>29.05.1981 | Examiner<br>SGURA | |

EPO Form 1503.1 06.78